# FASCICULE DE BREVET EUROPEEN

(11) **EP 2 325 847 B1**
(45) Date de publication et mention de la délivrance du brevet: **08.01.2014**
(21) Numéro de dépôt: 10306269.1
(22) Date de dépôt: 18.11.2010
(51) Int. Cl.: G21C 13/028, F16J 15/00, G21C 13/073, F16J 15/08

(54) **Procédé de sécurisation et de confinement du plan de joint d'une cuve d'un réacteur nucléaire et joint pour la mise en oeuvre de ce procédé.**
Verfahren zur Sicherung und zum Abdichten der Trennfuge eines Kernreaktordruckgefässes und Dichtungselement zur Durchführung des Verfahrens
Method for securing and confining the junction plane of a nuclear reactor vessel and sealing gasket for implementing said method

(30) Priorité: 18.11.2009 FR 0958128
(43) Date de publication de la demande: 25.05.2011
(73) Titulaire: Areva NP, 92400 Courbevoie (FR)
(72) Inventeur: Ricot, Jean-Yves, 69700 Echalas (FR); Ledrappier, Florent, 26130 Saint Paul Trois Chateaux (FR); Morice, Ludovic, 42100 Saint-Etienne (FR); Lombard, David, 42220 Saint Sauveur En Rue (FR); Juliaa, Jean-François, 26200 Montelimar (FR)
(74) Mandataire: Domenego, Bertrand

(56) Documents cités:
- EP-A2- 0 313 887
- GB-A- 877 277
- KR-A- 20010 038 819

## Description

La présente invention concerne un procédé de sécurisation et de confinement du plan de joint d'une cuve d'un réacteur nucléaire lors d'une opération de fermeture de cette cuve.

L'invention concerne également un joint annulaire pour la mise en oeuvre de ce procédé

Les réacteurs nucléaires à eau sous pression comportent, à l'intérieur du bâtiment du réacteur, une cuve contenant le coeur du réacteur nucléaire constitué par des assemblages combustibles, généralement de forme prismatique, disposés verticalement et de manière juxtaposée.

A l'intérieur de la cuve du réacteur, sont disposés des équipements internes assurant en particulier le support et le maintien des assemblages combustibles du coeur du réacteur nucléaire.

La cuve, de forme générale cylindrique, est formée à sa partie inférieure par un fond bombé et comporte une extrémité supérieure qui est fermée pendant le fonctionnement du réacteur nucléaire, par un couvercle bombé. Ce couvercle de la cuve est traversé par des tubes ayant une disposition verticale, appelés adaptateurs utilisés pour assurer le passage de prolongateurs permettant le déplacement de grappes de commande dans certains assemblages du coeur.

Lorsque le couvercle est posé sur la cuve, il détermine un plan de joint formé par un évidement annulaire ménagé sur une bride de la cuve et par un épaulement annulaire de forme complémentaire audit évidement et ménagé sur le couvercle de cuve.

L'évidement et l'épaulement respectivement de la bride de cuve et du couvercle, déterminent deux surfaces planes sensiblement horizontales en regard l'une de l'autre et entre lesquelles sont légèrement écrasés deux joints toriques lorsque le couvercle est serré sur la cuve.

Le couvercle est fixé sur la cuve du réacteur par des goujons qui sont vissés dans la bride de la cuve et qui traversent dans des trous lisses prévus dans une collerette du couvercle.

Ces goujons sont généralement en assez grand nombre et relativement rapprochés les uns des autres, le démontage et le remontage du couvercle nécessitent donc le dévissage et le vissage de tous ces goujons.

Par ailleurs, pendant les opérations de serrage et de desserrage, on exerce, par un dispositif de tension, une traction sur les goujons afin de les mettre dans un état de précontrainte.

L'étanchéité en fonctionnement du réacteur entre la cuve et le couvercle est donc réalisée par les deux joints toriques, le plus souvent en «inconel» (marque déposée) ou en acier inoxydable plaqué d'argent. Ces joints sont placés dans deux rainures concentriques prévues sur la surface plane de l'épaulement du couvercle.

Ces joints portent sur la surface plane en regard de la bride de cuve et les portées de ces joints sont usinées de façon à obtenir une surface parfaite qui n'admet aucune marque, aucun défaut.

Le serrage du couvercle par les goujons écrase légèrement les joints dont la surface d'appui est large d'environ 1 mm et généralement de l'ordre de 3 mm.

L'évidement et l'épaulement respectivement de la bride de cuve et du couvercle, comportent chacun une paroi verticale délimitant entre elles un interstice après la pose du couvercle sur la bride de cuve.

Lors des opérations de rechargement d'une partie du réacteur nucléaire, on réalise un arrêt à froid du réacteur et on démonte le couvercle fermant la partie d'extrémité supérieure de la cuve.

Après le retrait de ce couvercle, un couvercle provisoire est placé sur la cuve en plaçant un joint provisoire gonflable sur le bord de l'évidement de la bride de la cuve pour assurer une étanchéité provisoire.

Lors de la pose du couvercle sur la bride de la cuve après le rechargement du coeur du réacteur nucléaire, le joint provisoire gonflable est retiré après réalisation de la décontamination de la piscine à l'aide d'un nettoyeur sous pression.

Au début des opérations de serrage du goujon, le couvercle est légèrement soulevé par rapport à la bride de cuve en raison de l'effort produit par les ressorts des assemblages combustibles et de l'anneau de calage. Il existe donc un jeu d'environ 2 à 3 mm entre les joints disposés au-dessous du couvercle et la portée de joint sur la bride de cuve.

Il se trouve qu'après des opérations de maintenance, il a été constaté une fuite à l'issue de la fermeture d'une cuve d'un réacteur nucléaire et cette fuite a été justifiée par la présence probable de micro-copeaux métalliques ou autres particules sur la portée des joints d'étanchéité de la bride de cuve lors de la mise en tension des goujons de serrage du couvercle sur ladite bride de cuve par une machine à serrer et à desserrer les goujons.

La formation de ces micro-copeaux résulte probablement du frottement des sommets des filets des goujons sur la paroi des trous lisses du couvercle au cours du montage desdits goujons sur la bride de cuve par la machine à serrer et à desserrer.

Du fait du retrait du joint provisoire gonflable avant les opérations de vissage des goujons, ces micro-copeaux ont pu cheminer jusque sous la portée de joint en passant par l'interstice ménagé entre l'épaulement du couvercle et l'évidement de la cuve et arriver jusqu'à la portée desdits joints pendant la phase de vissage du goujon.

Lors du redémarrage de la tranche à une pression primaire de l'ordre de 25 bars et à une température de l'ordre de 30°C, une fuite ainsi peut se produire au niveau de la portée de joint.

On connaît dans le GB 877 277, un joint annulaire en forme de C qui est placé au niveau du plan de joint formé par l'évidement annulaire ménagé sur la bride de la cuve et par l'épaulement annulaire de forme complémentaire audit évidement ménagé sur le couvercle de cuve Chaque bord latéral d'extrémité du joint annulaire est soudé sur une paroi honzontale, respectivement du couvercle et de la bride de cuve

Le joint annulaire est soudé après la pose du couvercle sur la cuve si bien que lors de l'opération de soudage des micro-particules ou des corps étrangers peuvent cheminer jusque sous la portée de jont en passant par l'interstice.

De plus, au cours d'une nouvelle opération de chargement d'une partie du réacteur nucléaire, il faut avant le retrait du couvercle, éliminer in-situ au moins un des cordons de soudure ce qui complique énormément les opérations, augmente le temps d'arrêt du réacteur et génère des copeaux potentiellement gênants

EP 0313887 et KR 2001 0038819 décrivent des joints annulaires pour le confinement du plan de joint d'une cuve de réacteur nucléaire

L'invention a pour but de proposer un procédé de sécurisation et de confinement du plan de joint d'une cuve d'un réacteur nucléaire lors d'une opération de fermeture de cette cuve qui permet par des moyens simples à mettre en oeuvre, d'éviter ces inconvénients et d'empêcher la migration des particules de matière solide vers l'intérieur de la cuve du réacteur nucléaire.

L'invention a donc pour objet un procédé et un joint annulaire de sécurisation et de confinement d'un plan de joint d'une cuve d'un réacteur nucléaire, respectivement selon les revendications 1 et 2.

Selon des modes particuliers de réalisation de l'invention :
- les organes d'auto-maintien comprennent au moins deux languettes métalliques opposées et fixées sur la face extérieure du feuillard en regard de la paroi verticale de l'épaulement du couvercle,
- chaque languette est fixée sur la face extérieure du feuillard par soudage et à une épaisseur comprise entre 0,2 et 0,5 mm et de préférence de l'ordre de 0,25 mm,
- le feuillard du joint annulaire a la forme d'un anneau flexible de faible épaisseur comprise entre 0,3 et 1 mm et de préférence de l'ordre de 0,5 mm,
- le feuillard du joint annulaire présente une section transversale en forme de L comportant deux parois formant entre elles un angle, respectivement une paroi supérieure dont le bord latéral d'extrémité est en appui sur la paroi horizontale du couvercle et une paroi inférieure moins large que la paroi supérieure et dont le bord latéral d'extrémité est en appui sur la paroi horizontale de la bride de cuve,
- les languettes sont fixées sur la face extérieure de la paroi supérieure du feuillard, et
- les languettes sont fixées sur la face extérieure de la paroi inférieure du feuillard.

L'invention et ses avantages seront mieux compris à la lecture de la description qui va suivre, donnée à titre d'exemple et faite en se référant aux dessins annexés, sur lesquels :
- la Fig. 1 est une vue schématique en coupe axiale d'une cuve d'un réacteur nucléaire renfermant le coeur et les structures internes du réacteur,
- les Figs. 2 et 3 sont des vues partielles et en coupe dans un plan vertical, respectivement du couvercle avec un joint annulaire et de la bride de cuve,
- la Fig. 4 est une vue schématique en perspective d'un premier mode de réalisation du joint annulaire,
- la Fig. 5 est une vue partielle et en coupe dans un plan vertical de la bride de cuve et du couvercle avec le joint annulaire, avant serrage du couvercle,
- la Fig. 6 est une vue partielle et en coupe dans un plan vertical de la bride de cuve et du couvercle avec le joint annulaire, après serrage du couvercle, et
- la Fig. 7 est une vue schématique en coupe dans un plan vertical d'un second mode de réalisation du joint annulaire.

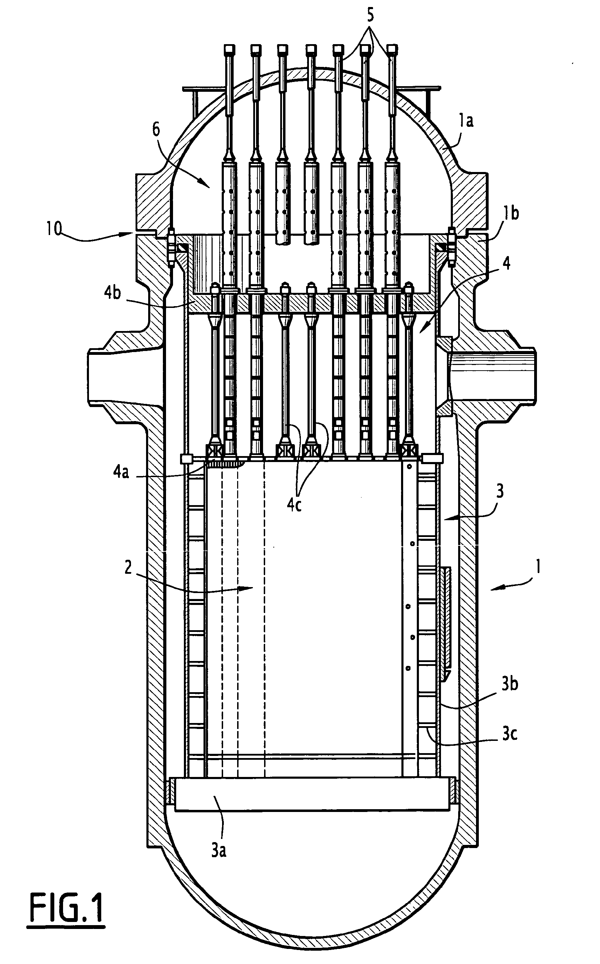

Sur la Fig. 1, on a représenté une cuve d'un réacteur nucléaire à eau sous pression désignée de manière générale par la référence 1.

La cuve 1, de forme générale cylindrique, est formée à sa partie inférieure par un fond bombé et comporte une extrémité supérieure qui est fermée pendant le fonctionnement du réacteur nucléaire, par un couvercle bombé 1a en appui sur une bride de cuve 1 b.

La cuve 1 renferme le coeur 2 du réacteur constitué par des assemblages combustibles, non représentés, de forme générale prismatique disposés verticalement et de manière juxtaposée à l'intérieur des structures internes désignées d'une manière générale par le repère 3. Ces structures internes constituent les équipements internes inférieurs du réacteur nucléaire.

Les équipements internes inférieurs 3 comportent en particulier une plaque de support du coeur 3a, une enveloppe de coeur 3b et un cloisonnement 3c de maintien latéral du coeur 2 du réacteur nucléaire.

Sur la partie supérieure du coeur 2, repose un second ensemble appelé équipements internes supérieurs du réacteur nucléaire.

De manière classique, les équipements internes supérieurs 4 comportent en particulier une plaque inférieure 4a par l'intermédiaire de laquelle les équipements internes supérieurs reposent sur la partie supérieure du coeur 2 et qui est appelée plaque supérieure de coeur.

Les équipements internes supérieurs comportent de plus, une plaque supérieure de forte épaisseur 4b constituant la plaque de support des tubes guides 6 des barres de commande du réacteur nucléaire. Des colonnes entretoises 4c assurent l'assemblage et l'entretoisement des plaques 4a et 4b qui sont parallèles entre elles et placées horizontalement dans le réacteur nucléaire.

Le couvercle 1a de la cuve 1 est traversé par des tubes 5 ayant une disposition verticale, appelés adaptateurs, utilisés pour assurer le passage de prolongateur de déplacement de grappes de commande dans certains assemblages du coeur.

Le couvercle 1 a délimite avec la bride de cuve 1 b un plan de joint 10.

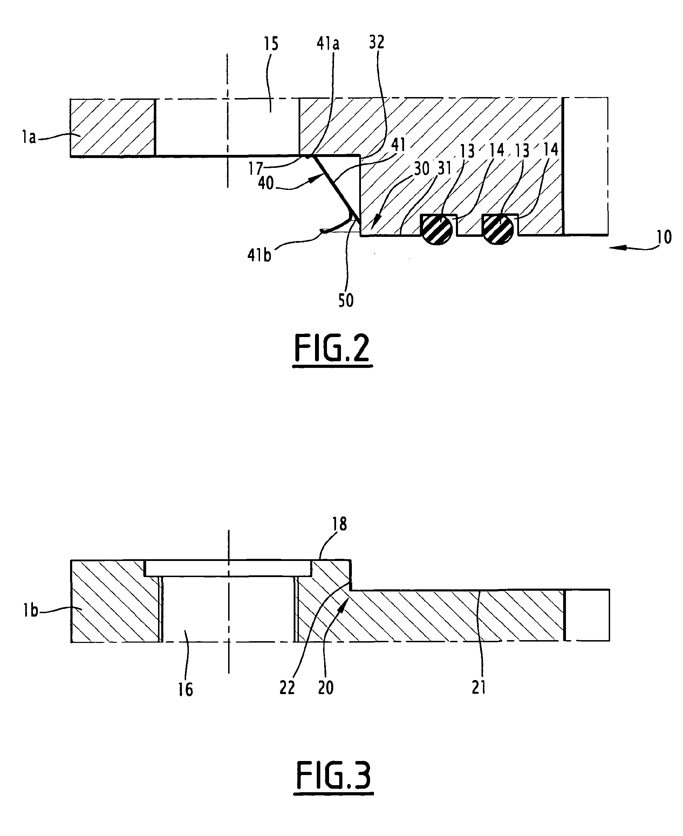

Ainsi que montré à la Fig. 1 et plus particulièrement à plus grande échelle sur la Fig. 2, ce plan de joint 10 est formé par un évidement annulaire 20 ménagé sur la bride de cuve 20b et par un épaulement annulaire 30 ménagé sur le couvercle 1a de la cuve 1. L'évidement 20 et l'épaulement 30 sont en vis-à-vis l'un de l'autre.

L'évidement 20 comporte une paroi horizontale 21 et une paroi verticale 22 et l'épaulement 30 comporte une paroi horizontale 31 en regard de la paroi horizontale 21 et une paroi verticale 32 en regard de la paroi verticale 22 de l'évidement 20.

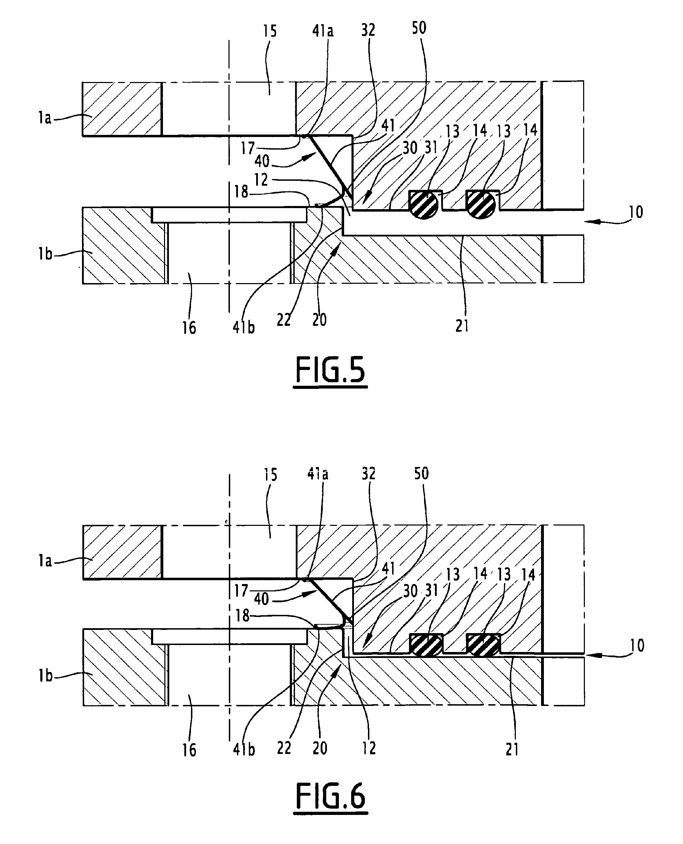

Les parois verticales 22 et 32, respectivement de l'évidement 20 et de l'épaulement 30, délimitent entre elles un interstice 12 après la pose du couvercle 1a sur la bride de cuve 1 b, ainsi que montré sur les Figs. 5 et 6.

De manière classique, la paroi horizontale 31 de l'épaulement 30 comporte deux joints toriques 13 fixés chacun dans une rainure 14 au moyen d'organes appropriés, comme par exemple des taquets, non représentés.

Les joints toriques 13 sont légèrement écrasés lorsque le couvercle 1a est serré sur la bride 1b de la cuve 1. Le couvercle 1a est fixé sur la bride de cuve 1b par des goujons, non représentés, qui sont vissés dans des trous taraudés 16 ménagés dans la bride 1b et qui traversent des trous lisses 15 prévus dans une collerette du couvercle 1a.

Ces goujons sont généralement en assez grand nombre et relativement rapprochés les uns des autres, le démontage et le remontage du couvercle nécessitent donc le dévissage et le vissage de tous ces goujons.

Pendant les opérations de serrage et de desserrage, un dispositif de tension de type connu, non représenté, exerce une traction sur les goujons afin de les mettre dans un état de précontrainte.

Afin d'éviter que des micros-copeaux métalliques ou autres particules de matière solide ne se déposent sur la portée 21 des joints d'étanchéité 13 de la bride de cuve 1 b lors du vissage ou du dévissage des goujons, pouvant entraîner des fuites, un joint annulaire désigné par la référence générale 40, est intercalé entre la bride de cuve 1 b et le couvercle 1a au niveau de l'épaulement 30 dudit couvercle et plus particulièrement au niveau de l'interstice 12, ainsi que représenté sur les Figs. 2, 5 et 6.

Le joint annulaire 40 est formé par un feuillard métallique 41 qui a, de préférence, la forme d'un anneau flexible de faible épaisseur comprise entre 0,3 et 1 mm et plus particulièrement de l'ordre de 0,5 mm.

D'une manière générale, le feuillard 41 constituant le joint annulaire 40 comporte un premier bord latéral d'extrémité 41a destiné à venir en appui sur une paroi horizontale 17 du couvercle 1a et un second bord latéral d'extrémité 41b destiné à venir en appui sur une paroi horizontale 18 de la bride 1b de la cuve 1 lorsque le couvercle 1 a est monté sur la bride de cuve 1b, ainsi qu'on le verra ultérieurement.

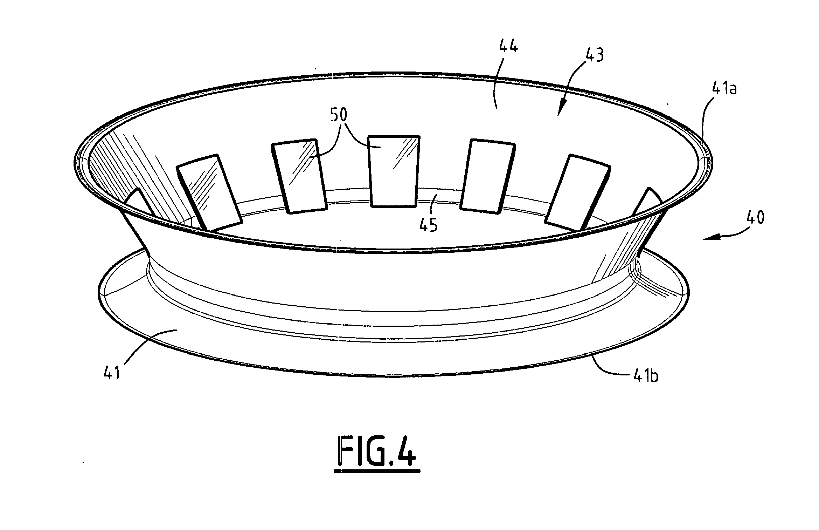

Comme représenté à la Fig. 4, le feuillard 41 du joint annulaire 40 comporte des organes d'auto-maintien dudit joint 40 sur la paroi verticale 32 de l'épaulement 30 du couvercle 1a, lorsque ce couvercle 1a a été retiré de la bride de cuve 1 b et posé sur un support, non représenté.

Les organes d'auto-maintien comprennent au moins deux languettes métalliques 50 opposées et, de préférence, plusieurs languettes métalliques 50 uniformément réparties sur le pourtour du feuillard 41 du joint 40.

Les languettes métalliques 50 sont fixées sur la face extérieure du feuillard 41 destinée à être placée en regard de la paroi verticale 32 de l'évidement 30 et ces languettes 45 sont fixées par soudage.

Chaque languette 50 a une épaisseur comprise entre 0,2 et 0,5 mm et de préférence de l'ordre de 0,25 mm.

Comme représenté à la Fig. 4, le feuillard 41 présente, de préférence, une section transversale en forme de L comportant deux parois formant entre elles un angle, respectivement une paroi supérieure 44 et une paroi inférieure 45 de largeur inférieure à la largeur de la paroi supérieure 44.

Selon un premier mode de réalisation représenté à la Fig. 4, les languettes 50 sont fixées sur la face extérieure 43 de la paroi supérieure 44 du feuillard 41.

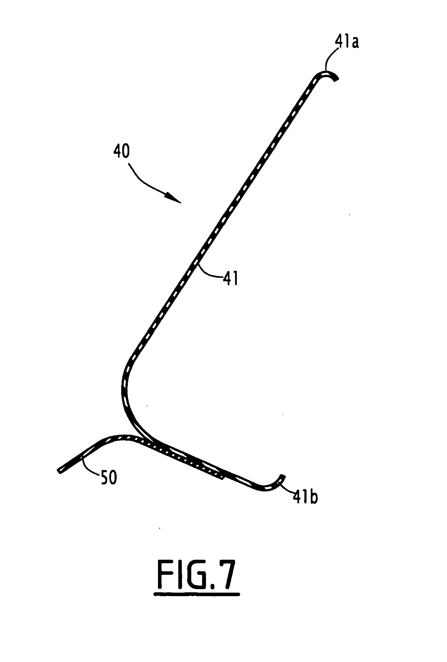

Selon un second mode de réalisation représenté à la Fig. 7, les languettes 50 sont fixées sur la face extérieure 43 de la paroi inférieure 45 du feuillard 41.

D'une manière générale, le feuillard métallique 41 constituant le joint 40 peut avoir tout autre forme comme par exemple présenter une section transversale en forme de C ou en forme de V.

La pose du joint annulaire 40 au niveau du plan de joint 10 entre le couvercle 1a et la bride de cuve 1 b, est réalisée de la façon suivante.

Au cours d'une opération de maintenance ou d'une opération de rechargement du coeur du réacteur nucléaire, les goujons sont dévissés et le couvercle 1a est retiré de la cuve 1. Ce couvercle 1a est posé sur un support, non représenté, de façon à permettre à des opérateurs d'accéder au joint torique 13 et éventuellement de procéder à leur remplacement.

Les opérateurs placent manuellement le feuillard 41 autour de la paroi verticale 32 de l'épaulement 30 en appliquant le bord latéral supérieur 41 a contre la paroi horizontale 17 de cet épaulement 30. Les bords libres des languettes 50 d'auto-maintien sont en appui sur la paroi verticale 32 de l'épaulement 30 et assurent le maintien du feuillard 41 par arc-boutement sur cette paroi verticale 32. Compte tenu du profil asymétrique du feuillard 41 constituant le joint 40 et du poids de ce feuillard, les languettes 50 forment des éléments de blocage et de maintien du joint 40 en place sur l'épaulement 30 du couvercle 1a.

Ensuite, le couvercle 1 a portant le joint annulaire 40 est transporté au-dessus de la cuve 1b et, au cours de ce transport, le joint annulaire 40 est maintenu uniquement par les languettes 50 sans aucun autre élément.

Le couvercle 1a est positionné à une hauteur déterminée de la bride de cuve 1 b et un contrôle de propreté du plan de joint 10 est effectué.

Ensuite, et comme montré à la Fig. 5, le couvercle 1a est descendu sur la cuve pour que les bords latéraux d'extrémité 41 a et 41 b du feuillard 41 viennent en contact avec une paroi horizontale, respectivement la paroi horizontale 17 de l'épaulement 30 du couvercle 1 a et la paroi horizontale 18 de l'évidement 40 de la bride de cuve 1 a.

Ainsi, et avant le serrage des goujons, le feuillard 41 empêche toute migration de micro-particules ou de corps étrangers de matière solide vers l'intérieur de la cuve avant la mise en contact des joints toriques 13 sur la portée 21.

Le couvercle 1a est ensuite fixé sur la bride de cuve 1 b, par serrage des goujons, non représentés.

Lors du serrage du couvercle 1a sur la cuve 1, le feuillard 41 formant le joint annulaire 40 s'écrase progressivement, comme représenté à la Fig. 5.

Le joint annulaire 40 assure donc du fait des contacts respectivement des bords latéraux 41 a et 41 b sur les parois horizontales 17 et18 du couvercle 1 a et de la bride de cuve 1 b et également du fait du contact de la génératrice 41 c sur la paroi verticale 32 de l'épaulement 30 par écrasement des languettes 50, un confinement du plan de joint 10 empêchant la migration de micro-copeaux ou de toutes autres particules vers ledit plan de joint 10 et vers l'intérieur de la cuve.

Le joint annulaire 40 reste en place durant tout le cycle de fonctionnement du réacteur nucléaire suivant sa mise en place et est remplacé lors du cycle suivant.

De préférence, le feuillard 41 du joint annulaire 40 est en acier inoxydable.

Lors d'un nouveau retrait du couvercle 1a, le joint annulaire 40 peut être facilement retiré sans aucune opération particulière. En effet, lors d'un arrêt le joint peut être déposé manuellement, en vue de son remplacement. Le couvercle est alors placé sur son stand, le retrait du joint ne présente pas de difficultés particulières et ne génère pas de pollution en particulier au niveau de la cuve ou de la piscine du réacteur.

Le joint annulaire selon l'invention permet donc de réaliser une sécurisation et un confinement du plan de joint d'une cuve d'un réacteur nucléaire lors d'une opération de fermeture de cette cuve afin d'éviter toute intrusion de micro-copeaux ou de corps étrangers entre les joints et la portée de ces joints avant et pendant le serrage des goujons assurant la fixation du couvercle sur la bride de cuve du réacteur nucléaire.

Le joint annulaire présente l'avantage de pouvoir être posé facilement sur l'épaulement du couvercle de la cuve du réacteur nucléaire sans aucune opération particulière de fixation.

## Revendications

1. Procédé de sécurisation et de confinement du plan de joint (10) d'une cuve (1) d'un réacteur nucléaire lors d'une opération de fermeture de cette cuve (1) pour empêcher la migration des particules de matière solide vers l'ntérieur de ladite cuve (11), ledit plan de joint (10) étant formé par une bride (1b) de la cuve (1) et par un couvercle (1a) de cuve et délimitant entre eux un interstice (12) après la pose du couvercle (1a) sur la bnde de cuve (1), le procédé consiste, après avoir démonté le couvercle (1a) et posé ce couvercle sur un support
- à placer autour d'un épaulement (30) du couvercle (1a) un joint annulaire (40) formé par un feuillard métallique (41) maintenu sur la paroi verticale (32) de l'épaulement (30) par des organes d'auto-maintien (50) solidaires dudit feuillard (41),
- à mettre en place le couvercle (1a) portant le joint annulaire (40) au-dessus de la cuve (1 b) en le positionnant à une hauteur déterminée et à effectuer un contrôle de propreté du plan de joint (10),
- à descendre et à poser le couvercle (1a) sur la cuve (1b) pour que les bords latéraux d'extrémité (41a, 41 b) du feuillard (41) viennent en contact avec une paroi horizontale (17, 18), respectivement du couvercle (1a) et de la bride de cuve (1 b),
- à fixer ce couvercle (1a) sur la bride de cuve (1b), et
- à laisser le joint annulaire (40) en place pendant tout le cycle de fonctionnement du réacteur,
caractérisé en se que le plan de joint (10) est formé par un évidement annulaire (20) ménagé sur la bnde (1b) et par un épaulement annulaire (30) ménagé sur le couvercle (1a) de cuve, ledit évidement (20) et ledit épaulement (30) étant en vis-à-vis et comportant chacun une paroi verticale (22, 32) délimitant entre elles l'interstice (12) après la pose du couvercle (1a) sur la bride de cuve (1), l'épaulement (30) comportant une paroi horizontale (31) munie de deux joints toriques (13) d'étanchéité, les organes d'auto-maintien comprenant plusieurs languettes métalliques (50) uniformément réparties sur le pourtour du feuillard (41) et fixées sur la face extérieure dudit feuillard (41) en regard de la paroi verticale (32) de l'épaulement (30) du couvercle (1a).

2. Joint annulaire (40) de sécurisation et de confinement du plan de joint (10) d'une cuve (1) d'un réacteur nucléaire lors d'une opération de fermeture de cette cuve pour empêcher la migration des particules de matière solide vers l'intérieur de ladite cuve (11), ledit plan de joint (10) étant formé par un évidement annulaire (20) ménagé sur une bride (1b) de la cuve (1) et par un épaulement annulaire (30) ménagé sur un couvercle (1a) de cuve et ledit évidement (20) et ledit épaulement (30) étant en vis-à-vis et comportant chacun une paroi verticale (22, 32) déhmitant entre elles un interstice (12) , l'épaulement (30) comportant une paroi horizontale (31) munie de deux joints toriques (13) d'étanchéité, le joint (40) étant formé par un feuillard métallique (41) comportant, d'une part, deux bords latéraux d'extrémité (41 a, 41 b) aptes à venir en appui chacun sur une paroi horizontale (17, 18), respectivement du couvercle (1a) et de la bride de cuve (1b), et, d'autre part, des organes d'auto-maintien (50) dudit joint annulaire (40) sur la paroi verticale (32) de l'épaulement (30) du couvercle (1a), **caractérisé en ce que** les organes d'auto-maintien comprennent plusieurs languettes métalliques (50) uniformément réparties sur le pourtour du feuillard (41) et fixées sur la face extérieure dudit feuillard (41) en regard de la paroi verticale (32) de l'épaulement (30) du couvercle (1a).

3. Joint annulaire (40) selon la revendication 2, **caractérisé en ce que** les organes d'auto-maintien comprennent au moins deux languettes métalliques (50) opposées et fixées sur la face extérieure du feuillard (41) en regard de la paroi verticale (32) de l'épaulement (30) du couvercle (1a)

4. Joint annulaire (40) selon la revendication 2 ou 3, **caractérisé en ce que** chaque languette (50) est fixée sur la face extérieure du feuillard (41) par soudage et a une épaisseur comprise entre 0,2 et 0,5 mm et de préférence de l'ordre de 0,25 mm.

5. Joint annulaire (40) selon l'une quelconque des revendications 2 à 4, **caractérisé en ce que** le feuillard (41) du joint annulaire (40) a la forme d'un anneau flexible de faible épaisseur comprise entre 0,3 et 1 mm et de préférence de l'ordre de 0,5 mm

6. Joint annulaire (40) selon l'une quelconque des revendications 2 à 5, caracténsé en ce que le feuillard (41) du joint annulaire (40) présente une section transversale en forme de L comportant deux parois (44, 45) formant entre elles un angle, respectivement une paroi supérieure (44) dont le bord latéral d'extrémité (41a) est en appui sur la paroi horizontale 17 du couvercle (1a) et une paroi inférieure (45) moins large que la paroi supérieure (44) et dont le bord latéral d'extrémité (41 b) est en appui sur la paroi horizontale (18) de la bride de cuve (1b).

7. Joint annulaire (40) selon l'une quelconque des revendications 3 à 6, **caractérisé en ce que** les languettes (50) sont fixées sur la face extérieure de la paroi supérieure (44) du feuillard (41).

8. Joint annulaire (40) selon l'une quelconque des revendications 3 à 6, **caractérisé en ce que** les languettes (50) sont fixées sur la face extérieure de la paroi inférieure (45) du feuillard (41).

## Patentansprüche

1. Verfahren zur Sicherung und zum Abdichten der Trennebene (10) eines Kernreaktorbehälters (1) bei dem Vorgang des Verschließens dieses Behälters (1), um die Migration von Feststoffpartikeln in das Innere dieses Behälters (1) zu verhindern, wobei die Trennebene (10) durch einen Flansch (1b) des Behälters (1) und durch einen Behälterdeckel (1a) gebildet wird, die zwischen sich einen Spalt (12) nach dem Aufsetzen des Deckels (1a) auf den Flansch des Behälters (1) begrenzen, wobei das Verfahren, nachdem der Deckel (1a) demontiert wurde und dieser Deckel auf einen Träger angeordnet wurde, darin besteht:
- um einen Ansatz (30) des Deckels (1a) eine ringförmige Dichtung (40) anzuordnen, die von einem Metallband (41) gebildet wird, das auf der vertikalen Wand (32) des Ansatzes (30) durch Selbsthalteorgane (50) gehalten wird, die mit dem Band (41) verbunden sind,
- den die Ringdichtung (40) tragenden Deckel (1a) über dem Behälter (1b) in Stellung zu bringen, indem er auf eine bestimmte Höhe positioniert wird, und eine Überprüfung der Reinheit der Trennebene (10) durchzuführen,
- den Deckel (1a) auf den Behälter (1b) abzusenken und zu platzieren, damit die seitlichen Endränder (41a, 41b) des Bandes (41) in Kontakt mit einer horizontalen Wand (17, 18) jeweils des Deckels (1a) und des Flansches des Behälters (1b) kommen,
- diesen Deckel (1a) auf dem Flansch des Behälters (1b) zu fixieren und
- die Ringdichtung (40) in Stellung während des gesamten Betriebszyklus des Reaktors zu lassen,
**dadurch gekennzeichnet, dass** die Trennebene (10) durch eine ringförmige Ausnehmung (20), die an dem Flansch (1b) eingearbeitet ist, und durch einen Ringansatz (30), der an dem Deckel (1a) des Behälters angeordnet ist, gebildet wird, wobei die Ausnehmung (20) und der Ansatz (30) einander gegenüberstehen und jeweils eine vertikale Wand (22, 32) aufweisen, die zwischen sich den Spalt (12) nach der Anordnung des Deckels (1a) auf dem Flansch des Behälters (1) begrenzen, wobei der Ansatz (30) eine horizontale Wand (31) umfasst, die mit zwei torischen Dichtungen (13) ausgerüstet ist, wobei die Selbsthalteorgane mehrere metallische Zungen (50) umfassen, die gleichmäßig über dem Umfang des Bandes (41) verteilt sind und auf der Außenfläche des Bandes (41) gegenüberstehend zur vertikalen Wand (32) des Ansatzes des Deckels (1a) befestigt sind.

2. Ringdichtung (40) zur Sicherung und zum Abdichten der Trennebene (10) eines Kernreaktorbehälters (1) bei einem Vorgang des Verschließens dieses Behälters, um die Migration von Feststoffpartikeln ins Innere des Behälters (10) zu vermeiden, wobei die Trennebene (10) durch eine Ringausnehmung (20), die an einem Flansch (1b) des Behälters (1) angeordnet ist, und durch einen Ringansatz (30) gebildet wird, der an dem Behälterdeckel (1a) angeordnet ist, und wobei die Ausnehmung (20) und der Ansatz (30) sich gegenüberstehen und jeweils eine vertikale Wand (22, 32) umfassen, die zwischen sich einen Spalt (12) begrenzen, wobei der Ansatz (30) eine horizontale, mit zwei torischen Dichtungen (13) ausgerüstete Wand aufweist und die Dichtung (40) durch ein Metallband (41) gebildet wird, das einerseits zwei seitliche Endränder (41a, 41b), die geeignet sind, jeweils auf einer horizontalen Wand (17, 18) jeweils des Deckels (1a) und des Flansches des Behälters in Abstützung zu kommen, und andererseits Selbsthalteorgane (50) der Ringdichtung (40) an der vertikalen Wand (32) des Ansatzes (30) des Deckels (1a) umfasst, **dadurch gekennzeichnet, dass** die Selbsthalteorgane mehrere Metallzungen (50), die gleichmäßig über den Umfang des Bandes (41) verteilt sind und an der Außenfläche des Bandes (41) befestigt sind, gegenüberstehend zur vertikalen Wand (32) des Ansatzes (30) des Deckels (1a) umfassen.

3. Ringdichtung (40) nach Anspruch 2, **dadurch gekennzeichnet, dass** die Selbsthalteorgane mindestens zwei gegenüberliegende Metallzungen (50), die an der Außenfläche des Bandes (41) befestigt sind, gegenüberstehend zur vertikalen Wand (32) des Ansatzes (30) des Deckels (1a) umfassen.

4. Ringdichtung (40) nach Anspruch 2 oder 3, **dadurch gekennzeichnet, dass** jede Zunge (50) an der Außenfläche des Bandes (41) durch Schweißen befestigt ist und eine Dicke zwischen 0,2 und 0,5 mm und vorzugsweise in der Größenordnung von 0,25 mm aufweist.

5. Ringdichtung (40) nach einem der beliebigen der Ansprüche 2 bis 4, **dadurch gekennzeichnet, dass** das Band (41) der Ringdichtung (40) die Form eines flexiblen Ringes mit geringer Dicke zwischen 0,3 und 1 mm und vorzugsweise in der Größenordnung von 0,5 mm aufweist.

6. Ringdichtung (40) nach einem der beliebigen der Ansprüche 2 bis 5, **dadurch gekennzeichnet, dass** das Band (41) der Ringdichtung (40) einen Querschnitt in L-Form aufweist, der zwei Wände (44, 45) umfasst, die zueinander einen Winkel bilden, respektive eine obere Wand (44), deren seitlicher Endrand (41a) sich auf der horizontalen Wand (17) des Deckels (1a) abstützt, und eine untere Wand (45), weniger breit als die obere Wand (44), deren seitlicher Endrand (41b) sich auf der horizontalen Wand (18) des Flansches des Behälters (1b) abstützt.

7. Ringdichtung (40) nach einem der beliebigen der Ansprüche 3 bis 6, **dadurch gekennzeichnet, dass** die Zungen (50) an der Außenfläche der oberen Wand (44) des Bandes (41) befestigt sind.

8. Ringdichtung (40) nach einem der beliebigen der Ansprüche 3 bis 6, **dadurch gekennzeichnet, dass** die Zungen (50) an der Außenfläche der unteren Wand (45) des Bandes (41) befestigt sind.

## Claims

1. A method for securing and confining the gasket plane (10) of a tank (1) of a nuclear reactor during an operation for closing this tank (1) in order to prevent the migration of solid material particles towards the inside of said tank (11), said gasket plane (10) being formed by a flange (1b) of the tank (1) and by a tank lid (1a), and delimiting between them a gap (12) after laying the lid (1a) on the tank flange (1), the method consisting of, after having disassembled the lid (1a) and having laid said lid (1a) on a support :
- placing around the lid (1a) a ring-shaped gasket (40) formed by a metal strip (41) maintained on the vertical wall (32) of the shoulder (30) by self-maintaining members (50) firmly attached to said strip (41),
- placing the lid (1a) bearing the ring-shaped gasket (40) above the tank (1b) by positioning it at a determined height and performing a cleanliness inspection of the gasket plane (10),
- lowering and laying the lid (1 a) on the tank (1b) so that the end side edges (41a, 41b) of the strip (41) come into contact with a horizontal wall (17, 18), of the lid (1a) and of the tank flange (1 b), respectively,
- attaching this lid (1 a) on the tank flange (1b), and
- leaving the ring-shaped gasket (40) in place during the whole operating cycle of the reactor,
**characterized in that** the gasket plane (10) is formed by a ring-shaped recess (20) made on the flange (1b) and by a ring-shaped shoulder (30) made on the tank lid (1a), said recess (20) and said shoulder (30) facing each other and each including a vertical wall (22, 32) delimiting between them the gap (12) after laying the lid (1 a) on the tank flange (1b), the shoulder (30) including a horizontal wall (31) provided with two O-ring seal gaskets (13), the self-maintaining members comprise several metal tabs (50) uniformly distributed over the perimeter of the strip (41) and attached on the outer face of said strip (41) facing the vertical wall (32) of the shoulder (30) of the lid (1a).

2. A ring-shaped gasket (40) for securing and confining the gasket plane (10) of a tank (1) of a nuclear reactor during an operation for closing this tank in order to prevent migration of solid material particles towards the inside of said tank (11), said gasket plane (10) being formed by a ring-shaped recess (20) made on a flange (1b) of the tank (1) and by a ring-shaped shoulder (30) made on a tank lid (1a) and said recess (20) and said shoulder (30) facing each other and each including a vertical wall (22, 32) delimiting between them a gap (12), the shoulder (30) including a horizontal wall (31) provided with two O-ring seal gaskets (13), the gasket (40) being formed by a metal strip (41) including two end side edges (41a, 41 b) each capable of bearing upon a horizontal wall (17, 18) of the lid (1a) and of the tank flange (1b) respectively, on the one hand, and self-maintaining members (50) of said ring-shaped gasket (40) on the vertical wall (32) of the shoulder (30) of the lid (1a) on the other hand, **characterized in that** the self-maintaining members comprise several metal tabs (50) uniformly distributed over the perimeter of the strip (41) and attached on the outer face of said strip (41) facing the vertical wall (32) of the shoulder (30) of the lid (1 a).

3. The ring-shaped gasket (40) according to claim 2, **characterized in that** the self-maintaining members comprise at least two opposite metal tabs (50) and attached on the outer face of the strip (41) facing the vertical wall (32) of the shoulder (30) of the lid (1 a).

4. The ring-shaped gasket (40) according to claim 2 or 3, **characterized in that** each tab (50) is attached on the outer face of the strip (41) by welding and has a thickness comprised between 0.2 mm and 0.5 mm and preferably of the order of 0.25 mm.

5. The ring-shaped gasket (40) according to any of claims 2 to 4, **characterized in that** the strip (41) of the ring-shaped gasket (40) has the shape of a flexible ring with a small thickness comprised between 0.3 mm and 1 mm and preferably of the order of 0.5 mm.

6. The ring-shaped gasket (40) accordingly to any of claims 2 to 5, **characterized in that** the strip (41) of the ring-shaped gasket (40) has an L-shaped cross-section including two walls (44, 45) forming between then an angle, an upper wall (44), the end side edge (41 a) of which bears upon the horizontal wall (17) of the lid (1 a) and a lower wall (45) of smaller width than the upper wall (44) respectively, and the end side edge (41 b) of which bears upon the horizontal wall (18) of the tank flange (1b).

7. The ring-shaped gasket (40) according to any of claims 3 to 6, **characterized in that** the tabs (50) are attached on the outer face of the upper wall (44) of the strip (41).

8. The ring-shaped gasket (40) according to any of claims 3 to 6, **characterized in that** the tabs (50) are attached on the outer face of the lower wall (45) of the strip (41).
